**Europäisches Patentamt**

**European Patent Office**

**Office européen des brevets**

(19)

(11) Veröffentlichungsnummer: **0 160 194 B1**

# EUROPÄISCHE PATENTSCHRIFT

(12)

(45) Veröffentlichungstag der Patentschrift:
**12.10.88**

(21) Anmeldenummer: **85102977.7**

(22) Anmeldetag: **15.03.85**

(51) Int. Cl.⁴: **F 16 D 27/14**, F 16 D 27/10, F 16 D 63/00

(54) **Elektromagnetische Kupplung oder Bremse.**

(30) Priorität: **27.03.84 DE 3411232**

(43) Veröffentlichungstag der Anmeldung:
**06.11.85 Patentblatt 85/45**

(45) Bekanntmachung des Hinweises auf die Patenterteilung:
**12.10.88 Patentblatt 88/41**

(84) Benannte Vertragsstaaten:
**CH DE FR GB IT LI**

(56) Entgegenhaltungen:
**DE-A-1 475 414**
**DE-A-1 625 690**
**FR-A-1 575 723**
**US-A-2 982 385**
**US-A-3 082 933**
**US-A-3 205 990**

(73) Patentinhaber: **Binder Magnete GmbH, Mönchweiler Strasse 1, D-7730 Villingen-Schwenningen 1 (DE)**

(72) Erfinder: **Bausch, Edmund, Dipl.- Ing. (FH), Bützestrasse 4, D-7730 Villingen- Schwenningen 21 (DE)**

(74) Vertreter: **Patentanwälte Dipl.- Ing. Klaus Westphal Dr. rer. nat. Bernd Mussgnug Dr. rer.nat. Otto Buchner, Waldstrasse 33, D-7730 VS-Villingen (DE)**

EP 0 160 194 B1

**Beschreibung**

Die Erfindung betrifft eine elektromagnetische Kupplung oder Bremse gemäß dem Oberbegriff des Patentanspruchs 1.

Bei einer aus US-A-2 982 385 bekannten elektromagnetischen Kupplung oder Bremse dieser Gattung sind die Reibelemente als radial durchgehende Sektoren im Anker angeordnet, die durch eine konzentrische Ringscheibe miteinander verbunden sind. Für die Drehmomentübertragung sind nur die verhältnismäßig geringen Bereiche der Ankerfläche wirksam, die dem kreisringförmigen Außenpol und dem kreisringförmigen Innenpol des Magnetkörpers gegenüberstehen. Zur Erzeugung des erforderlichen Reibmoments ist daher eine große Magnetkraft notwendig und aufgrund der relativ kleinen wirksamen Reibflächen entsteht an diesen eine hohe Temperatur. Der Anker verschleißt nur in den beiden radialen Bereichen, die mit dem Außenpol und dem Innenpol in Berührung kommen. Dies führt zu einem ungleichmäßigen Abrieb der Ankeroberfläche, woraus schwer beherrschbare Schwankungen im übertragenen Drehmoment und bei Verschleißnachstellung eine unvollständige Lüftung mit einem verbleibenden Restmoment im gelüfteten Zustand resultieren.

Bei einer aus US-A-3 205 990 bekannten elektromagnetischen Kupplung oder Bremse sind die Reibelemente im Magnetkörper zwischen dem Außenpol und dem Innenpol angeordnet. Dadurch ergeben sich verhältnismäßig große Reibflächen der Reibelemente, die mit dem Anker zusammenwirken, und eine verbesserte Drehmoment-Übertragung. Die unterschiedlichen Reibeigenschaften der Reibelemente und der kreisringförmigen Pole führen jedoch auch hier zu einem unterschiedlichen Verschleiß des Ankers in den radialen Bereichen, die den Polflächen und den Reibelementen gegenüberliegen. Es treten auch hier die oben genannten Probleme auf.

Bei einer aus DE-A-1 475 414 bekannten Kupplung oder Bremse sind der Innenpol und der Außenpol mit gegen den Anker vorspringenden Polbereichen ausgebildet, die zur Drehmomentübertragung mit dem Anker in Berührung kommen. Diese Polbereiche verlaufen in Umfangsrichtung entweder abschnittsweise radial oder flach-spiralig gegeneinander versetzt. In der mit dem Anker in Berührung kommenden Oberfläche wechseln sich daher in Umfangsrichtung jeweils diese vorspringenden Polbereiche mit den dazwischenliegenden Oberflächen bereichen des Reibelementes ab, so daß die unterschiedlichen Reibungs- und Verschleißeigenschaften der Polbereiche und des Reibelementes nicht zu einem unterschiedlichen Verschleiß der Oberfläche des Ankers führen. Der Magnetfluß wird zwischen den Polen des Magnetkörpers und dem Anker jedoch nur durch die relativ kleinen vorspringenden Polbereiche geführt. Die das Reibmoment erzeugenden magnetischen Kräfte sind daher gering. Um die wirksame Polfläche für eine gute Drehmomentübertragung ausreichend groß zu machen, müssen der Durchmesser des Magnetkörpers und damit die Einbauabmessungen der Kupplung oder Bremse vergrößert werden. Die radial und in Umfangsrichtung gegeneinander versetzten vorspringenden Polbereiche verteuern die Herstellung in einer insbesondere bei kleinen Kupplungen oder Bremsen unvertretbaren Weise.

Der Erfindung liegt die Aufgabe zugrunde, eine Kupplung oder Bremse der eingangs genannten Gattung so zu verbessern, daß sie bei kleinen radialen Abmessungen eine hohe Drehmomentübertragung ermöglicht und einen gleichmäßigen Verschleiß der Ankeroberfläche aufweist.

Diese Aufgabe wird bei einer Kupplung oder Bremse der eingangs genannten Gattung erfindungsgemäß gelöst durch die Merkmale des kennzeichnenden Teiles des Patentanspruchs 1.

Vorteilhafte Ausführungsformen der Erfindung sind in den Unteransprüchen angegeben.

Durch die radial durchgehende Anordnung der Reibelemente in der Polfläche des Magnetkörpers wird die gesamte Ankeroberfläche für die Erzeugung des Drehmoments in gleicher Weise ausgenutzt. Trotz der unterschiedlichen Reibungs- und Verschleißeigenschaften des Materials der Pole und der Reibelemente ergibt sich ein völlig gleichmäßiger Verschleiß der gesamten Ankeroberfläche und ebenso der Oberfläche des Innen- und Außenpols und der Reibelemente. Auch bei zunehmendem Verschleiß ändern sich die Drehmomentübertragungsverhältnisse nicht. Bei einer Verschleißnachstellung können wieder genau die ursprünglichen Eigenschaften bezüglich der Führung des Magnetflusses und der Lüftung der Bremse oder Kupplung erreicht werden

Die Anordnung der Reibelemente jeweils nur in einem radial durchgehenden Winkelausschnitt ermöglicht es, den kreisringförmigen Innenpol und den kreisringförmigen Außenpol jeweils bis an die mit dem Anker in Berührung kommende Reibungsoberfläche der Reibelemente zu führen. Die gesamte Fläche des Innenpoles und des Außenpoles und nicht nur von diesen vorspringende Polbereiche wirken als den Magnetfluß führende Polflächen. Es können große wirksame Polflächen auch bei kleinerem Durchmesser der Kupplung oder Bremse erhalten werden. Auch die radiale Breite der Innenpol und Außenpol trennenden Fuge kann groß gehalten werden, ohne daß dies die wirksamen Polflächen von Innen- und Außenpol wesentlich reduziert. Die große wirksame Polfläche führt zu einer hohen Magnetkraft und damit zu einem starken Reibmoment und ebenso zu einem zuverlässigen Anziehen des Ankers, auch wenn sich der Luftspalt bei fortschreitendem Verschleiß vergrößert. Zusätzlich wird die wirksame Magnetkraft dadurch vergrößert, daß die Breite der Fuge die Verluste durch Streufluß reduziert. Da keine vorspringenden Polbereiche erforderlich sind, kann auch die axiale Bauabmessung der Kupplung oder Bremse kleiner gehalten werden.

Die radial durchgehend ausgebildeten Reibelemente vereinfachen die Herstellung außerordentlich. Die Aufnahmen für die Reibelemente können aufgrund ihrer durchgehend geradlinigen Randkanten auch bei kleinen Polflächen in einfacher Weise eingearbeitet werden. Dabei können die Reibelemente im wesentlichen sektorförmig ausgebildet sein, was den Vorteil hat, daß die wirksame Polfläche des Außenpoles und des Innenpoles zwischen den Reibelementen in einfacher Weise flächengleich gemacht werden kann. Die Reibelemente können auch als radial verlaufende rechteckige Streifen konstanter Breite ausgebildet sein. Dadurch wird die wirksame Polfläche des Innenpoles stärker verkleinert, so daß der Durchmesser des Innenpoles vergrößert werden muß. Diese Ausbildung vereinfacht aber zusätzlich die Herstellung der Reibelemente und insb. der Ausnehmungen in den Polflächen zur Aufnahme dieser Reibelemente.

Die Reibelemente bestehen aus einem hoch verschleißfesten Material, z. B. aus einem Keramikmaterial. Dadurch eignet sich die Kupplung bzw. Bremse in gleicher Weise für Trockenlauf und Ölnaßlauf.

Um ein über den Umfang gleichmäßiges Reibmoment zu erhalten, sind mindestens zwei Reibelemente, vorzugsweise je doch vier Reibelemente in gleichem gegenseitigem Winkelabstand vorgesehen.

Der Außenpol und der Innenpol werden durch Stege zusammengehalten, die die Außenpol und Innenpol trennende Fuge überbrücken. Diese Stege sind im Bereich der radial verlaufenden Reibelemente vorgesehen. Die Stege bewirken zwar einen geringfügigen magnetischen Kurzschluß zwischen Aussenpol und Innenpol, dieser ist jedoch auf die wirksame Magnetkraft von geringem Einfluß, da die Reibelemente in diesem Bereich ohnehin den wirksamen Magnetfluß zu dem Anker unterbrechen. Andererseits wirken die Stege aber als stützende Auflage für die Reibelemente.

Im folgenden wird die Erfindung anhand eines in der Zeichnung dargestellten Ausführungsbeispieles näher erläutert. Es zeigen:

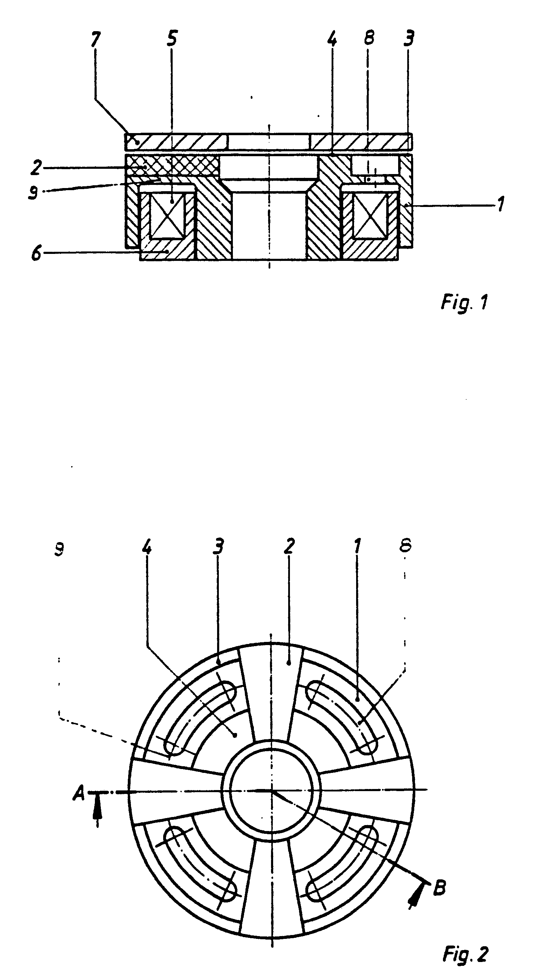

Figur 1   einen Axialschnitt durch eine Kupplung bzw. Bremse entsprechend der Schnittlinie A - B in Figur 2 und

Figur 2   eine Draufsicht auf den Polkörper der Kupplung bzw. Bremse.

Die Kupplung bzw. Bremse weist einen ringförmigen Magnetkörper mit einer axialen Bohrung auf, der aus einem die Erregerwicklung 5 tragenden Körper 6 und einem auf diesem Körper 6 sitzenden Polkörper 1 besteht. Der Polkörper 1 weist einen an seinem Umfang als Kreisring axial vorragenden Außenpol 3 und einen Innenpol 4 auf, der mit kleinerem Durchmesser koaxial zum Außenpol 3 vorragt. Der Außenpol 3 und der Innenpol 4 sind durch eine bis zur Erregerwicklung 5 durchgehende Fuge 8 voneinander getrennt. Damit Außenpol 3 und Innenpol 4 den gleichen Durchtrittsquerschnitt für den Magnfluß aufweisen, ist die radiale Breite des Innenpols 4 größer als die des Außenpols 3. Die axialen Stirnflächen von Außenpol 3 und Innenpol 4 liegen in einer Ebene.

In einem axialen Abstand vor der Ebene von Außenpol 3 und Innenpol 4 ist ein kreisscheibenförmiger Anker 7 mit einer zentrischen Bohrung angeordnet.

Fließt durch die Erregerwicklung 5 ein Strom, so wird der Anker 7 gegen den Polkörper 1 gezogen, so daß ein geschlossener Magnetkreis über den Körper 6, den Polkörper 1, den Außenpol 3, den Anker 7, den Innenpol 4, den Polkörper 1 und den Körper 6 gebildet wird.

In die Pole 3 und 4 sind vier um 90° gegeneinander versetzte Reibelemente 2 eingesetzt, die aus einem hochverschleißfesten keramischen Reibmaterial bestehen, dessen Verschleißfestigkeit gleich oder größer ist als die der Pole 3 und 4. Die Reibelemente 2 erstrecken sich radial durchgehend vom Innenrand des Innenpols 4 bis zum Außenrand des Außenpols 3, wobei sie sich sektorförmig nach außen erweitern. Die Winkelbreite der Reibelemente liegt zwischen etwa 15° und 30°. Die axiale Stirnfläche der Reibelemente 2 liegt bündig in der Ebene der Pole 3 und 4.

Im Bereich der Reibelemente 2 weist der Polkörper 1 jeweils einen den Außenpol 3 und den Innenpol 4 verbindenden Steg 9 auf, der die Fuge 8 überbrückt. Die Stege 9 halten den radial außerhalb des Körpers 6 und den radial innerhalb des Körpers 6 liegenden Teil des Polkörpers 1 zusammen. Außerdem stützen die Stege 9 die Reibelemente 2 an deren dem Anker 7 entgegengesetzten Unterseite ab.

Im Einsatz als Kupplung sitzt beispielsweise die Antriebswelle fest in der zentrischen Bohrung des Polkörpers 1. Der Anker 7 sitzt mittels eines Mitnehmers drehfest und axial verschiebbar auf der Abtriebswelle. Bei eingeschalteter Erregerwicklung 5 wird der Anker 7 gegen die von den Polen 3 und 4 und den Reibelementen 2 gebildete Oberfläche gezogen, so daß ein das Drehmoment übertragender Reibschluß entsteht.

Im Einsatz als Bremse ist der Polkörper 1 ortsfest montiert und der Anker 7 sitzt drehfest und axial verschiebbar auf der abzubremsenden Antriebswelle.

Der die Erregerwicklung 5 tragende Körper 6 steht sowohl im Einsatz als Kupplung als auch im Einsatz als Bremse still. Bei der Verwendung als Kupplung ist der Polkörper 1 drehbar auf dem Körper 6 gelagert.

## Patentansprüche

1. Elektromagnetische Kupplung oder Bremse mit einer Erregerwicklung (5), mit einem den Magnetfluß der Erregerwicklung führenden Magnetkörper (1), der einen kreisringförmigen Innenpol (4) und einen konzentrischen, kreisringförmigen, durch eine in Umfangsrichtung verlaufende Fuge (8) von dem Innenpol (4) getrennten Außenpol (3) aufweist, mit einem gegen die Pole (3, 4) bewegbaren, die Pole (3, 4) magnetisch überbrückenden Anker (7) und mit zwei oder mehr Reibelementen (2) aus hochverschleißfestem Material, die in gleichem gegenseitigem Winkelabstand und jeweils in einem Winkelausschnitt radial durchgehend angeordnet sind, dadurch gekennzeichnet, daß die Reibelemente (2) voneinander getrennt bündig in der Oberfläche der Pole (3, 4) angeordnet sind und sich über die gesamte radiale Breite von Innenpol (4) und Außenpol (3) erstrecken.

2. Kupplung oder Bremse nach Anspruch 1, dadurch gekennzeichnet, daß die Reibelemente (2) im wesentlichen sektorförmig ausgebildet sind.

3. Kupplung oder Bremse nach Anspruch 1, dadurch gekennzeichnet, daß die Reibelemente (2) im wesentlichen rechteckig streifenförmig ausgebildet sind.

4. Kupplung oder Bremse nach Anspruch 1, dadurch gekennzeichnet, daß die den Innenpol (4) und den Außenpol (3) trennende Fuge (8) im Winkelbereich der Reibelemente (2) durch Stege (9) überbrückt ist.

## Claims

1. Electromagnetic clutch or brake, comprising an exciting winding (5), a magnetic body (1) carrying the magnetic flux of said exciting winding, said body having an annular internal pole (4) and an annular external pole (3), said external pole being separated from said internal pole by a concentric annular gap (8) extending circumferentially, an armature (7) movable relative to said poles (3, 4), said armature bridging said poles (3, 4) magnetically, and at least two friction members (2) made from highly wear-restistant material, arranged in equal angular spacings, and radially extending continuously, characterized in that said friction members (2) are separated from each other and flush mounted with the pole surfaces (3, 4) and covering full radial width of said internal pole (4) and said external pole (3).

2. Clutch or brake according to claim 1, characterized in that said friction members (2) are substantially sector-shaped.

3. Clutch or brake according to claim 1, characterized in that said friction members (2) are formed substantially rectangular and lamellar.

4. Clutch or brake according to claim 1, characterized in that said gap (8) dividing said internal pole (4) and said external pole (3), is bridged by cross-pieces (9).

## Revendications

1. Embrayage ou frein électromagnétique muni d'un enroulement inducteur (5), d'une culasse (1) véhiculant le flux magnétique de l'enroulement inducteur et qui présente un pôle annulaire intérieur (4) et un pôle annulaire extérieur (3) concentrique au pôle intérieur (4) et séparé de celui-ci par un intervalle (8) s'étendant dans la direction périphérique, d'une armature (7) déplaçable en direction des pôles (3, 4) et qui shunte les pôles (3, 4) magnétiquement, et de deux ou plusieurs éléments de friction (2) en matière hautement résistante à l'usure, lesquels sont disposés à une même distance angulaire les uns des autres et ce en s'étendant de manière continue radialement dans une découpure angulaire, caractérisé en ce que les éléments de friction (2) sont disposés séparément les uns des autres au ras de la surface des pôles (3, 4) et s'étendent sur toute la largeur radiale du pôle intérieur (4) et du pôle extérieur (3).

2. Embrayage ou frein selon la revendication 1, caractérisé en ce que les éléments de friction (2) sont réalisés sensiblement sous forme de secteurs.

3. Embrayage ou frein selon la revendication 1, caractérisé en ce que les éléments de friction (2) sont réalisés sensiblement de façon rectangulaire en forme de rubans.

4. Embrayage ou frein selon la revendication 1, caractérisé en ce que l'intervalle (8) séparant le pôle intérieur (4) et le pôle extérieur (3) est franchi dans la région angulaire des éléments de friction (2) par des entretoises (9).

Fig. 1

Fig. 2